# EUROPEAN PATENT SPECIFICATION

(11) **EP 1 604 099 B1**
(45) Date of publication and mention of the grant of the patent: **12.09.2007**
(21) Application number: 04760763.5
(22) Date of filing: 11.03.2004
(51) Int. Cl.: F01N 3/08, F01N 3/20, F01N 3/24

(54) **MANAGEMENT OF THERMAL FLUCTUATIONS IN LEAN NOx ADSORBER AFTERTREATMENT SYSTEMS**
WÄRMESCHWANKUNGSMANAGEMENT IN MAGER ARBEITENDEN NOx-SPEICHER-ABGASSYSTEMEN
GESTION DES FLUCTUATIONS THERMIQUES DANS DES SYSTEMES DE POST-TRAITEMENT COMPRENNANT UN PIEGE A NOx

(30) Priority: 14.03.2003 CA 2422164; 17.12.2003 CA 2453689
(43) Date of publication of application: 14.12.2005
(73) Proprietor: Westport Power Inc., Vancouver, BC V6P 6G2 (CA)
(72) Inventor: ANCIMER, Richard, Vancouver, British Columbia V6L 3B1 (CA); HARRIS, Jonathan, M., S., Burnaby British Columbia V3N 2Y1 (CA); LEBASTARD, Olivier, Burnaby, British Columbia V5E 4M9 (CA); DUNN, Mark, E., Vancouver, British Columbia V6K 4V7 (CA)
(74) Representative: Gray, John James
(86) International application number: PCT/CA2004/000390
(87) International publication number: WO 2004/101962

(56) References cited:
- EP-A- 0 537 968
- EP-A- 1 111 212
- EP-A- 1 134 367
- EP-A- 1 186 757
- US-A- 5 910 097
- US-B1- 6 393 834
- PATENT ABSTRACTS OF JAPAN vol. 2000, no. 16, 8 May 2001 (2001-05-08) & JP 2001 003732 A (TOYOTA MOTOR CORP), 9 January 2001 (2001-01-09)

## Description

### Field of the Invention

This invention relates to methods and apparatus for managing exhaust gas heat over the range of operating conditions required by a lean NOx adsorber aftertreatment system.

### Background of the Invention

Emissions controls for internal combustion engines are becoming increasingly important in transportation and energy applications. Oxides of nitrogen (NOx) are of particular concern. NOx forms during combustion in internal combustion engines.

A lean NOx adsorber (LNA) can be used to remove NOx from exhaust gas. LNAs reduce NOx by trapping the NOx in a catalyst washcoat. NOx trapping in the LNA is referred to herein as adsorption. The NOx stored in the washcoat is reduced to nitrogen gas (N2) periodically. This reduction process is referred to as regeneration or a regeneration cycle.

Where sulfur is found in the engine fuel or where sulfur-containing engine lubricating oil has leaked into the combustion chamber', oxides of sulfur can also be trapped within the LNA washcoat. As discussed in, by way of example, U.S. Patent No. 6,393,834, sulfur poisoning of LNAs from oxides of sulfur in the exhaust gas can interfere with the ability of the LNA to remove NOx. Removing these oxides of sulphur periodically during operation of the engine helps to maintain the efficiency of the LNA. Processes used to remove sulphur compounds are referred to as de-sulfation. Regeneration and de-sulfation cycles both require a low oxygen potential (or "rich") environment to be effective. Regeneration, de-sulfation and removal of NOx each work best when the exhaust gas temperature is within a different range.

An article entitled "NOx Adsorbers", DieselNet Technology Guide, www.DieselNet.com Revision 2002.09 describes an after treatment system wherein a sulphur trap, also called a SOx adsorber, is disposed in an exhaust line upstream of an NOx adsorber to reduce the rate of sulphur poisoning of the NOx adsorber. The article discloses that unless a line is used to bypass the exhaust gas around the NOx adsorber during desulphation, the sulphur released from the SOx adsorber is re-adsorbed while passing through the NOx adsorber.

The acid-based chemistry of the washcoat dictates the temperature ranges at which the LNA washcoat effectively traps NOx and SOx. In general, trapped sulfate compounds are more stable than trapped nitrate compounds. That is, the ability of the LNA washcoat to store sulphates extends to higher temperature ranges than is the case for NOx. For similar reasons, the temperature at which de-sulfation proceeds tends to be higher than the temperature required for regeneration.

"De-sulfation temperature" is used herein to refer to that relatively high temperature at which sulfur is effectively released from the LNA washcoat. The performance of current LNA washcoats tends to deteriorate, mainly due to sintering, when exposed to temperatures in excess of 700°C. Exceeding 700°C by a significant margin increases the rate of deterioration. De-sulfation temperatures can approach and exceed 700°C leading to poor long-term performance of the LNA.

For regeneration of the LNA, a regeneration temperature which is less than the de-sulfation temperature is generally preferred.

During the adsorption phase', the exhaust gas is lean and NOx is being trapped within the LNA. Lower exhaust gas temperatures can be tolerated during the adsorption phase and are selected to allow the LNA to adsorb NOx over a suitable range of the engine map. Preferred exhaust gas temperatures during an adsorption cycle may overlap with regeneration, temperatures and are generally lower than de-sulfation temperatures (all of which can depend.on the washcoat composition, the reductant chosen and other factors within the aftertreatment system).

In light of the range of preferred exhaust gas temperatures that depend on the aftertreatment control sought for the LNA, flexibility in providing those temperatures over the range of potential engine operating conditions is important. Control over the temperature to which the LNA is exposed can both extend the life of the LNA and improve its effectiveness at removing NOx from internal combustion engine exhaust gas. Moreover, the faster the regeneration or de-sulfation temperatures are reached within the exhaust gas and then returned to preferred adsorption cycle temperatures, the less the fuel penalty for regeneration of de-sulfation and the less NOx delivered from the engine as a result of these cycles.

Oxidation of a reductant in the exhaust gas, referred to here as in-line oxidation, can provide the necessary heat and reductants to either regenerate or de-sulfate an LNA as well as create the reduced oxygen potential environment necessary for de-sulfation. Oxidation may be promoted by a catalyst. The catalyst should be located in close enough proximity to the engine that exhaust gas temperatures are sufficient to cause the catalyst to "light-off" at all engine out temperatures yet still be proximate enough to the LNA to provide rich exhaust gas regeneration temperatures or de-sulfation temperatures. However, the LNA reactive capacity (the ability of the LNA to trap NOx) is relatively low at the temperature needed for the effective operation of the reformer/oxidation catalyst. Therefore, consideration must be given to ensure that exhaust gas passing through the LNA during an adsorption cycle is cool enough (for example, placed distant from the engine) to allow the LNA to operate efficiently over a wide range of engine operation conditions.

EP 1 134 367 describes an exhaust-gas cleaning system for a combustion engine which includes an exhaust gas duct and a by-pass duct having a heat-exchanger through which the exhaust gas can flow, the flow of gas being controlled by switching elements provided in the exhaust gas duct. The exhaust gas duct provides for exhaust gas flow through a first catalyst and a further NOₓ storage catalyst provided in the exhaust gas duct.

US 6,508,057 describes a device for eliminating nitrogen oxides in an exhaust line of a lean-burn internal combustion engine. The device comprises a NOₓ trap and a hydrocarbon injector placed upstream form a hydrocarbon treating catalyst which in turn is provided upstream from the NO_{X} trap. Regeneration of the NOₓ trap is provided by decreasing the oxygen concentration and by increasing the concentration of reductant in the exhaust gas.

All references to "upstream" and "downstream" herein describe the relative position of components of the aftertreatment in relation to the direction of the flow of exhaust gas during an adsorption cycle of the LNA aftertreatment system (which may not be the same as the flow during a regeneration cycle or de-sulfation cycle), unless otherwise stated.

This invention provides methods and'apparatus for managing exhaust gas temperature using an LNA over a wide range of engine operating conditions.

### Summary of the Invention

This invention provides a method for managing exhaust gas heat into an LNA during adsorption, de-sulfation and regeneration cycles of the LNA. One aspect of the invention provides a hot route that shortcuts or provides a bypass route around, a cooling path between the LNA and an oxidation catalyst. Another aspect of the invention provides a long route or cooling route through the aftertreatment system. The coding route allows the exhaust gas to cool where needed. Another aspect provides a cooling route with a heat exchanger between an oxidation catalyst and an LNA for cooling the exhaust gas as needed. Another aspect of the invention provides a cooling route with a turbine between an oxidation catalyst and a LNA for cooling the exhaust and extracting energy from the exhaust gas heat. This energy may be used, in another aspect of the invention, to introduce air into the exhaust gas stream to cool the exhaust (by dilution) when needed. Another aspect of the invention provides for a sulfur trap to manage sulfur in the aftertreatment system.

An aftertreatment system is disclosed for treating NOx found in exhaust-gas produced during combustion of a fuel within a combustion chamber of an operating internal combustion engine. The system comprises:
an exhaust line for directing the exhaust gas from the engine;
a lean NOx adsorber disposed in the exhaust line;
a first catalyst disposed in the exhaust line upstream of the LNA, the catalyst capable of oxidizing a reductant in the exhaust gas ;
a reductant line for delivering a reductant from a reductant store to the catalyst;
a reductant flow control disposed in the reductant line for controlling flow of the reductant into the exhaust line; and
a flow control for controlling flow of exhaust gas through the hot line and the cooling line.

The exhaust line is capable of delivering exhaust gas from the first catalyst to the lean NOx adsorber.

In one embodiment of the aftertreatment system, the cooling line and the hot line are placed between the catalyst and the NOx adsorber. The cooling line is preferably longer than the exhaust line.

The system can further comprise a turbine, disposed within the cooling line, which drives an air blower disposed in an air dilution line for compressing and directing air into the cooling line.

In one embodiment of the system, an air blower disposed in an air dilution line can compress and direct air into the cooling line. A heat exchanger can also be disposed in the cooling line.

The aftertreatment system can further comprise a close-coupled catalyst in the exhaust line upstream of the system's first catalyst. The reductant line delivers reductant to the exhaust line, upstream of the close-coupled catalyst. In another embodiment, the reductant line delivers reductant upstream of the first catalyst.

In a further embodiment of the system, the exhaust line can comprise a bypass line used to direct exhaust gas around the first catalyst.

The aftertreatment system can further comprise a SOx adsorber, disposed in the exhaust line relative to the NOx adsorber, to remove SOx from the exhaust gas before it passes through the NOx adsorber. In a preferred embodiment, the exhaust line further comprises a sulfur line for bypassing exhaust gas around the NOx adsorber when regenerating the SOx adsorber, and a flow control for controlling exhaust gas flow through the sulfur line.

An aftertreatment system is disclosed, for treating NOx found in exhaust gas produced during combustion of a fuel within a combustion chamber of an operating internal combustion engine. The system comprises:
an exhaust line for directing the exhaust gas from the engine and through the aftertreatment system;
a lean NOx adsorber disposed in the exhaust line;
a first catalyst disposed in the exhaust line, the catalyst capable of oxidizing a reductant in the exhaust gas;
a reductant line for delivering the reductant from a reductant store to the exhaust line upstream of the catalyst;
a reductant flow control disposed in the reductant line for controlling flow of the reductant into the exhaust line;
a SOx adsorber disposed in the exhaust line;
a sulfur line capable of bypassing exhaust gas around the NOx adsorber;
a flow control for controlling flow of exhaust gas through the sulfur line wherein the exhaust line delivers exhaust gas from the catalyst and the SOx adsorber to the lean NOx adsorber.

In a preferred embodiment, the system further comprises: a sulfur line for bypassing exhaust gas around the NOx adsorber, and a flow control for controlling exhaust gas flow through the sulfur line.

A method is also provided of operating an internal combustion engine equipped with an aftertreatment system for removing NOx from exhaust gas. The method comprises an adsorption cycle, a regeneration cycle and a de-sulfation cycle.

During the adsorption cycle the exhaust gas is cooled to within a predetermined adsorption temperature range when the exhaust gas is above the adsorption temperature range. All of the cooled exhaust gas is directed through an exhaust line to a lean NOx adsorber disposed in the exhaust line.

During the regeneration cycle, the exhaust gas is oxidized to a lambda value of less than or equal to 1, the exhaust gas is heated to within a predetermined regeneration temperature range when the exhaust gas is below the regeneration, temperature range, and the oxidized and heated exhaust gas is directed through the lean NOx adsorber.

During the de-sulfation cycle, the exhaust gas is oxidized to a lambda value of less than or equal to 1, the exhaust gas is heated to within a predetermined de-sulfation temperature range when the exhaust gas is below the de-sulfation temperature range; and the oxidized and heated exhaust gas is directed through the lean NOx adsorber.

In preferred embodiments of the method, cooling the exhaust gas during the adsorption cycle, can further comprise one or more of: introducing air into the exhaust gas, expanding the exhaust gas, and directing, exhaust gas through a heat exchanger or through a turbine. In a preferred example, the turbine is used to drive a blower for directing air into the exhaust line upstream of the NOx adsorber.

In additional preferred embodiments, cooling the exhaust gas can further comprise: routing the exhaust through a cooling line, or directing a portion of the exhaust gas through the lean NOx adsorber or directing the exhaust gas through a SOx adsorber disposed in the exhaust line prior to directing the exhaust gas through the NOx adsorber.

In another embodiment of the method, exhaust gas is heated and oxidized by passing the exhaust gas through a catalyst with a reductant introduced into the exhaust gas.

The method can be practiced wherein the reductant comprises one or more hydrocarbons, hydrogen, or any combination thereof. In a preferred example, the hydrocarbon comprises natural.gas, diesel, methane, ethane, butane, propane, or any combination thereof.

Further aspects of the invention and features of specific embodiments of the invention are described below.

### Brief Description of the Drawings

In drawings which illustrate non-limiting embodiments of the invention:
Figure 1 is a graph demonstrating flow of exhaust gas and temperature over the range of engine operating conditions with adsorption (normal cycle), regeneration and de-sulfation zones.
Figure 2 is a schematic diagram of a first embodiment of the subject aftertreatment system.
Figure 3 is a schematic diagram of a second embodiment of the subject aftertreatment system.
Figure.4 is a schematic diagram of a generalized embodiment of the subject aftertreatment system.
Figure 5 is a schematic diagram of a third embodiment of the subject aftertreatment system.
Figure 6 is a schematic diagram of a fourth embodiment of the subject aftertreatment system.

### Detailed Description

A method of and apparatus for managing exhaust gas heat in a LNA aftertreatment system, are disclosed. The LNA is used to treat exhaust gases created during combustion of a fuel in an engine's combustion chamber. Relatively low exhaust gas temperatures (<450°C by way of example) are typically needed for effective operation of the LNA. However, high temperatures and a reducing atmosphere are also needed periodically. These requirements are independent of engine speed and load conditions. Thus, a means to independently control the temperature at the LNA is desirable for effective system operation.

When needed, the exhaust gas is cooled from the engine by passing the exhaust gas through a cooling line which could embody a heat exchanger, a long route (long as compared to an exhaust gas route provided for where hot exhaust gas is desired), or a turbine driven blower, by way of example. When a reduced oxygen potential environment is desired, a reductant, which may comprise, for example, methane, other hydrocarbons or hydrogen, can be introduced into the exhaust line and oxidized. This reduces the exhaust gas and elevates the temperature of the exhaust gas.

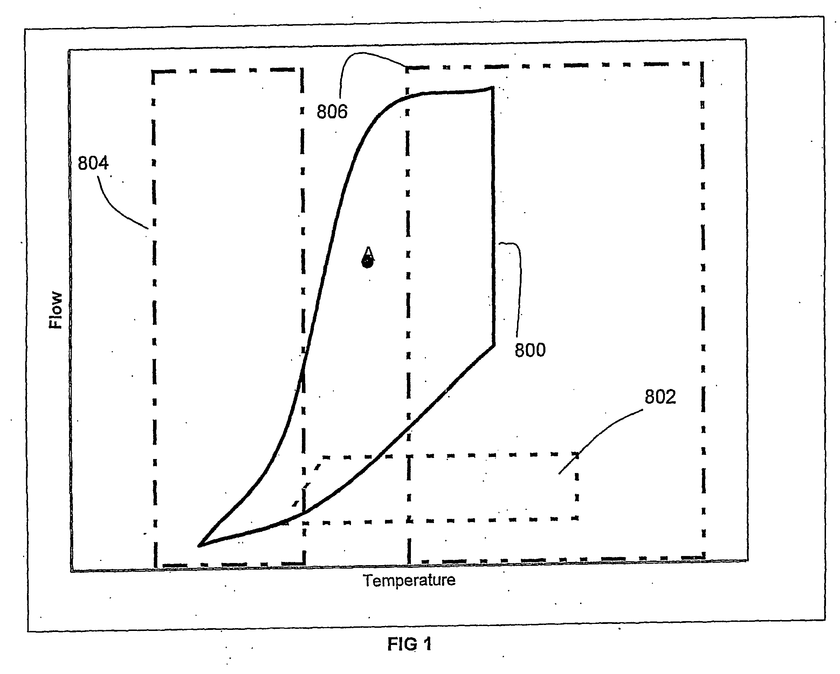

Figure 1 provides a graph of the flow of exhaust gas plotted against temperature. The area within curve 800 defines an example range of flow/temperature properties for exhaust gas exiting an engine block over operating conditions of the engine. The area within curve 802 defines a range of target properties for the exhaust gas directed into a catalyst during regeneration. The area within curve 804 defines a.range of target properties for the exhaust gas passing through an LNA during an adsorption cycle (normal cycle). The area within curve 806 defines a range of target properties for the exhaust gas through an LNA during de-sulfation.

Care should be taken to ensure that temperatures are not so high as to excessively reduce the durability or effective life of the LNA. Therefore, while curve 806 allows for effective de-sulfation, it may not be desirable to allow exhaust gases within the LNA to be at the highest temperatures within the range, depending on the properties of the LNA. Point A is a typical midpoint operating condition for the engine.

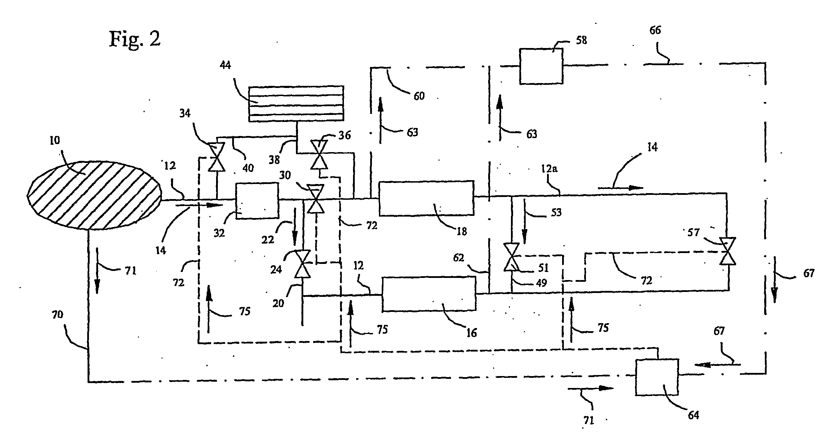

Figure 2 is a schematic diagram showing an aftertreatment system according to.one embodiment of the invention. Exhaust lines flow from the engine and through the aftertreatment system and are made up of a number of branches or alternate lines for controlling aftertreatment of the exhaust gases. These include lead line 12, line 12a, hot line 49 and bypass line 20. Lead line 12 carries exhaust gases flowing in the direction of arrow 14 from engine block 10 to a NOx aftertreatment system where it may be directed through alternate lines that generally make up an exhaust line. In the aftertreatment system, lead line 12 carries exhaust gases to LNA 16, as indicated'by arrow 14. Lead line 12 branches to line 12a and hot line 49 which bounds line 12a.

Gases exiting LNA 16 are delivered to an outlet through lead line 12. Catalyst 18 is disposed in lead line 12 upstream of LNA 16.

The term "exhaust line" is used herein to include all lines that carry exhaust gas within the aftertreatment system and into and out of the aftertreatment system.

Lead line 12 also branches to bypass line 20, which is capable of carrying a portion of the exhaust gases around LNA 16, as may be desirable while LNA 16 is being regenerated or de-sulfated. The exhaust gas may be directed through bypass line 20 as indicated by arrow 22 by opening bypass valve 24. Bypass valve 24 may be disposed anywhere along bypass line 20.

Valves 24 and 30 are provided to help control the flow of exhaust gas through lead line 12 during regeneration and de-sulfation.

Optional close-coupled catalyst 32 is provided in lead line 12 physically proximate to engine block 10. A reductant, preferably methane or another hydrocarbon or hydrogen, may be introduced just prior to catalyst 18 and/or catalyst 32. Reductant valves 34 and 36 are disposed in respective main line 38 and close-coupled line 40, each of which connect back to store 44 from which reductant is supplied.

Hot line 49 bypasses line 12a of the exhaust line running between catalyst 18 and LNA 16. Valves 51 and 57 are disposed in hot line 49 and line 12a, respectively. Arrow 53 indicates flow direction in hot line 49.

Temperature sensor 58 is used to measure temperatures before catalyst 18 and LNA 16 as shown by the respective intersection points of sensor feed lines 60 and 62 within lead line 12. Data flow is indicated by data direction lines 63. Sensor 58 feeds temperature information to controller 64 through feed line 66 as indicated by data direction line 67. Feed line 70 provides engine data to controller 64 as indicated by data direction line 71. Controller 64 operates valves 24, 30, 34, 36, 51 and 57 through feed line 72 as indicated by data direction lines 75.

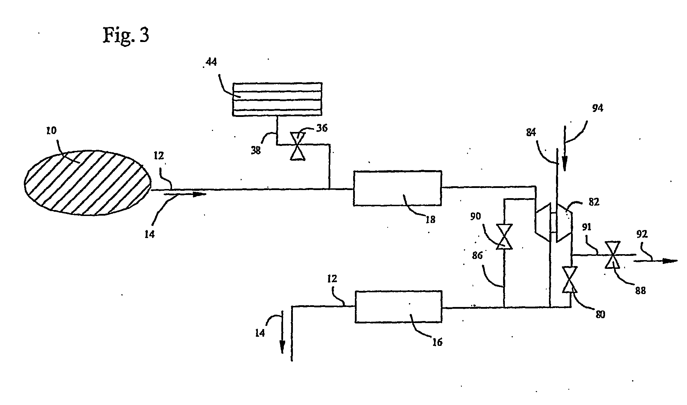

Figure 3 shows an aftertreatment system according to a second embodiment of the invention. As in the embodiment shown in Figure 2, exhaust gas is directed, as indicated by arrow 14, to LNA 16 from engine block 10 through exhaust lines that include lead line 12 and hot line 86. A reductant may be introduced into lead line 12 through line 38 as controlled by valve 36 from store 44. Catalyst 18 is available downstream of the junction of line 38 and lead line 12 to allow for the exhaust gas to be heated and oxidized across catalyst 18 as needed. Exhaust' gas temperature is further controlled by turbine-driven blower 82 disposed in lead line 12. Blower 82 accepts exhaust gas, expands and cools the gas to extract energy from the gas, and uses that energy to direct air through line 84 and valve 80 as indicated by arrow 94 (in the embodiment shown) to lead line 12 downstream of turbine-driven blower 82 and upstream of LNA 16.

The exhaust line includes hot line 86. Flow through hot line 86 is controlled by valve 90. Flow through line 91 is controlled by valve 88, as indicated by arrow 92.

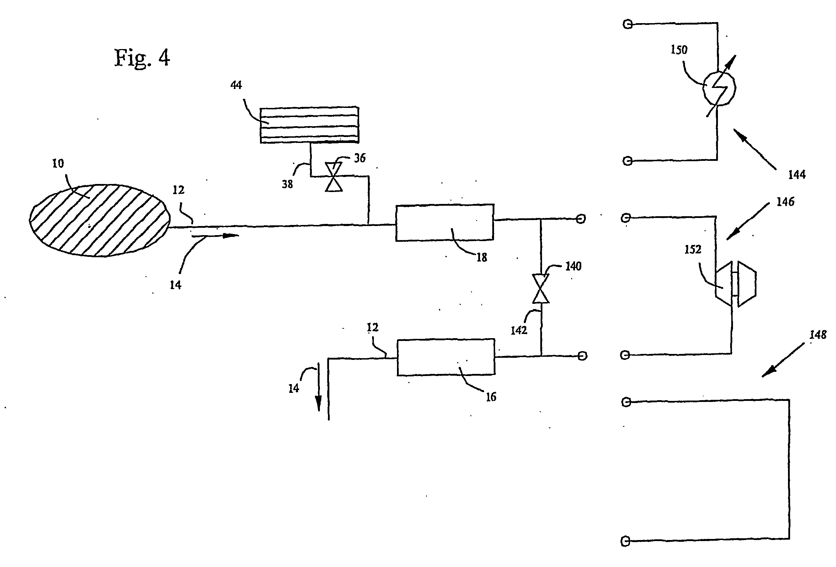

Figure 4 shows a generalized schematic diagram of an aftertreatment system according to the invention. Figure 4 illustrates three possible cooling loops to be attached between catalyst 18 and LNA 16 downstream of hot line 142. Flow through hot line 142 is controlled by valve 140. Exhaust lines in this embodiment include lead line 12, hot line 142 and cooling lines 144, 146 and 148. Cooling lines, 144, 146 and 148, include components of the exhaust line within the aftertreatment system. Heat exchanger route 144 has a heat exchanger disposed in lead line 12. Turbine route 146 has turbine 152 for converting heat energy of the exhaust gas (to a turbocharger by way of example). Long route 148 has an extended lead line 12 extended to allow for cooling of exhaust gas prior to delivering the exhaust gas to catalyst 16. Long route 148 and turbine route 146 are versions of the embodiments provided in Figures 2 and 3 respectively. One or more of the cooling lines, 144, 146 and 148, or other embodiments disclosed herein, could be incorporated into a LNA aftertreatment system.

Exhaust gas is generated by combustion events within one or more combustion chambers disposed upstream of lead line 12 in engine block 10. Exhaust gas results from the combustion of fuel. For example, the fuel could be hydrogen, a hydrocarbon such as natural gas, diesel or gasoline, or a mixed fuel that includes such fuels as natural gas or methane or other hydrocarbons. Combustion of a fuel that combines hydrogen and a hydrocarbon fuel such as natural gas, diesel or a mixed hydrocarbon is also contemplated. The fuel is, in general, either directly injected into the combustion chamber or pre-mixed with a quantity of air to create a fumigated charge. In each case, spark ignition, hot surface ignition or compression ignition is utilized to initiate the combustion process within the combustion chamber.

During an adsorption cycle of the aftertreatment system, it is desirable to maintain flow and exhaust gas temperature, within the area bounded by curve 804 to help ensure adequate removal of NOx from exhaust gas within the lean, oxygen rich, exhaust gas environment. Considering the range of operating temperatures and flow rates for exhaust gas generated during an adsorption cycle, an adsorption cycle of the aftertreatment system requires cooling of the exhaust gas from the engine prior to the LNA over at least a portion of operating conditions. This may be accomplished by causing at least a significant portion of the exhaust gas to flow'through a cooling line upstream from LNA 16.

During an adsorption cycle, LNA 16, under relatively cool, lean (oxygen rich) operating conditions, that is with an excess of oxygen available in the exhaust gas, will drive NOx to (NO₃)₂ by way of:

NO + ½ O₂ (Pt) → NO₂ (1)

XO + 2 NO₂ + ½ O₂ → X (NO₃) ₂ (2)

where X is in a washcoat (this is described further below).

Considering the embodiment of Figures 2 again, valves 24 and 51 are closed and exhaust gas flows along lead line 12, including line 12a. The exhaust gases cool down in traveling along the extended route provided by line 12a. That is, a cooling period through line 12 may be required to ensure that the exhaust temperature falls into area 804. The exhaust gas, at its desired temperature, passes through LNA 16 which removes NOx.

The extended route between block 10 and LNA 16 helps to provide for.a relatively cool exhaust gas during adsorption. The route length provided by line 12a and exhaust line material (s) used upstream from LNA 16 are selected to allow the exhaust temperature to fall within area 804 at all loads. Alternatively, if the engine rarely operates within the highest temperature portions of area 800, the resulting NOx slip may be acceptable for a reduced length or more flexibility in choice of materials for line 12a.

In the embodiment of Figure 3, the cooling loop, rather than an extended line from catalyst 18 to LNA 16, includes turbine-driven blower 82 disposed in lead line 12. Heat used to drive turbine-driven blower 82 and cool exhaust gas prior to LNA 16 is used to drive a compressor drawing in air through line 84, past valve 80 and into lead line 12. The exhaust gas is diluted and cooled with cooler intake air. Valves, 90, 88 and 80 can be used to adjust the temperature of the exhaust gases being delivered into LNA 16. Valve 88 is optional. The turbine in turbine driven blower 82 can also be used to drive a shaft if desired to generate work for other purposes.

Figure 4 shows an embodiment having a generalized cooling loop. Here the exhaust gas route between catalyst 18 and LNA 16 is shown in cooling loops 144, 146 and 148. Specifically, a turbine is shown in cooling loop 146. While used for providing air dilution in the embodiment discussed for Figure 3, it could be used to extract energy from the exhaust gas heat to drive a generator or other such applications.

Also, air dilution from an independent air compressor could be directed in to the exhaust line. This compressor could be driven by a independent electric motor or other independent energy source. Here, the turbine could be eliminated.

The engine coolant or other coolant (such as air) could be incorporated in a heat exchanger 150 to draw heat away from the exhaust gas when needed, as demonstrated in cooling loop 144. Cooling loop 148 is an extension of lead line 12. All these methods can be used to drive down exhaust gas temperature to provide for an adsorption cycle of the subject aftertreatment system.

Eventually LNA 16 becomes less effective at removing NOx as X(NO₃)₂ uses up adsorbing sites in LNA 16. As such, periodic regeneration is required to remove NOx. Controller 64 determines when LNA 16 needs regenerating.

During regeneration, the following provides a set of reactions found across catalyst 18 where methane is the reductant:

CH₄ + 2O₂ → CO₂ + 2H₂O (3)

CH₄ + ½O₂ → CO + 2H₂ (4)

CH₄ + H₂O → CO + 3H₂ (5)

CO + H₂O ↔ CO₂ + H₂ (6)

where reaction (6) can be held in equilibrium depending on exhaust gas temperature. Note also, that equation (3) may occur but is not preferred. The CO and H₂ generated according to equations (4) through (6) are then used for regeneration, for example, as follows:

X(NO₃)₂→ XO + 2NO + 3/2 O₂ (7)

X(NO₃)₂→ XO + 2NO₂ + ½O₂ (8)

NO + H₂ → H₂O + ½N₂ (9)

NO₂ + 2H₂ → ½N₂ + 2H₂O (10)

NO + CO (Rh) → ½N₂ + CO₂ (11)

N0₂ + 2CO → ½N₂ + 2CO₂ (12)

where X is provided in a.washcoat. A lambda less than or equal to 1, which denotes a low oxygen potential in the exhaust gas, favors reactions (7) through (12) ; this is not the case, in general, when lambda is above 1.

In general, a regeneration strategy can be employed targeting a regeneration flow and temperature of exhaust gas through the LNA. Catalyst 18 helps provides a hot and rich environment as is desirable to ensure regeneration. A reductant provided to catalyst 18 during regeneration is oxidized and reformed to provide an exhaust gas environment that has a low oxygen potential and includes effective reductants (from the catalyst or from reductant store 44) for regeneration such as CO and hydrogen.

As noted above, however, the regeneration temperature for the.exhaust gas may need to be hotter in general than the exhaust gas leaving block 10 over some engine operating conditions - see area 802. Therefore, during regeneration, it can be beneficial to retain heat generated in catalyst 18 or block 10 in the exhaust gas delivered to LNA 16. Where it was preferable to have LNA 16 well after or otherwise thermally "distant" from block 10 during an adsorption cycle, it can be desirable to reduce this thermal distance during regeneration. As such, referring to Figure 2, reductant from catalyst 18 is directed to LNA 16 at appropriate exhaust gas temperatures to provide for the sought regeneration environment by way of line 12a. As catalyst 18 has been lit off to reduce the exhaust gas environment, the resulting rise in exhaust temperature during oxidation of the exhaust gas is sufficient generally for regeneration of LNA 16. Therefore line 12a in general should be sufficient to regenerate (NOx) LNA 16. If there is too much heat loss through line 12a, then hot line 49 could be used. Note that the sensors (singular or plural) shown disposed in the aftertreatment system prior to catalyst 18 and LNA 16 can be used to control flow through LNA 16 during regeneration. The sensors could also be disposed after catalyst 18 as required.

It is also possible to use an off-line reformer for directing a reductant into the exhaust line just prior to LNA 16. This could make hot line 49 unnecessary. The reformer could heat the exhaust gas as needed by providing a hot gas (such as air) with the reductant. Such a system could also incorporate the benefits of bypass 20 by reducing the amount of exhaust gas to be heated and oxidized. Further, the cooling line can be used to control temperature during an adsorption cycle.

Referring to Figure 2, an optional close-coupled catalyst 32 may be provided to increase exhaust gas temperatures when desired. The proximity of catalyst 32 to engine block 10 helps ensure that exhaust gas is not too cool to oxidize the exhaust gas environment. Therefore, when the controller detects an exhaust gas temperature below a threshold temperature, valve 34 will provide reductant upstream of catalyst 32, heating and oxidizing the exhaust gas well upstream of LNA 16. This is useful when the engine is operating at low loads. In low load operation, the exhaust gas exiting block 10 is relatively cool. Extra catalyst 32 also helps to light off catalyst 18, when needed. Catalyst 18 may be located at a position in the exhaust gas path which is a compromise between being proximate to LNA 16 and being proximate to block 10, while LNA 16 and block 10 are thermally removed from each other.

Referring to Figure 3, a turbine driven blower is used to control temperature of exhaust gas between catalyst 18 and LNA 16. Where exhaust gas is determined to be undesirably cool for regeneration, the load on turbine driven blower 82 is reduced or eliminated. Here, line 91 is provided to direct intake air through valve 88 reducing or eliminating the load and therefore, maintaining some of the exhaust gas temperature. Alternatively, or in addition, hot line 86 can be used to bypass turbine driven blower 82 when exhaust gas heat needs to be maintained. As would be apparent to a person skilled in the art, the system shown in Figure 3 could operate with only hot line 86.

Referring to Figure 4, cooling loops 144, 146 and 148 all can be used to adjust exhaust gas heat where hot line 142 is available to divert heated and oxidized exhaust gas around either turbine 152, heat exchanger 150 or the extension of lead line 12 from loop 148. In addition, combinations, of the systems discussed above, in parallel or in series can be used.

As shown in Figure 2, sensors can be placed in the aftertreatment system to monitor temperature and, according to those readings, control flow of exhaust gas during regeneration.

A regeneration cycle targeted at regeneration of LNA 16, will usually fail to de-sulfate LNA 16. Within LNA 16, X(SOₓ) also uses up adsorbing sites that would otherwise be available to remove NOx. Therefore, in order to maintain the efficiency of LNA 16, in addition to a regeneration cycle, a de-sulfation cycle is also required periodically.

During a de-sulfation cycle, an example set of reaction conditions across catalyst 18, where methane is the reductant, comprises:

CH₄ + 2O₂ → CO₂ + 2H₂O (13)

CH₄ + ½O₂ → CO + 2H₂ (14)

The resulting rich and hot exhaust gas environment is used for de-sulfation as follows:

X (SOₓ) → SOₓ (15)

where X is in a washcoat.

As with regeneration, lambda should be low (quantitatively, a value below one) to promote reaction 7.

In addition to providing a rich exhaust gas environment, the temperature of the exhaust gas needs to be held at a temperature sufficient for effective de-sulfation. The temperature required for de-sulfation is higher than the temperature required for regeneration and typically higher than the temperature of the exhaust gas from block 10. In the embodiment of Figure 2, when a de-sulfation cycle is needed, hot line 49 is opened to shorten the distance traveled by the exhaust gas by bypassing line 12a of line 12. This helps to ensure that the heat from the exhaust gas is not dissipated significantly as the exhaust gas flows from catalyst 18 to LNA 16. As well, referring to Figures 3 and 4, if, in addition to long route, heat exchanger 150 or turbine driven blower 82 or turbine 152 are used, the hot line 49 may bypass these heat reducing systems as needed. The process is similar to that needed for regeneration. However, the temperatures sought for de-sulfation of LNA 16 are much higher referring to area 806 of Figure 1.

The adsorption, regeneration and de-sulfation cycles can be controlled through an open-loop control, based on selected parameters from the engine map, or closed-loop control, based, in part, on the exhaust gas temperature and the reactive capacity of catalyst 18 at the given exhaust gas temperature. By way of example, one open-loop control uses a calibration of the treatment system over a range of engine operating conditions to estimate the time required for LNA 16 to be regenerated or de-sulfated in light of the properties of catalyst 18. In such embodiments, the controller monitors such variables as the engine load and speed, and then determines from a look-up table, the time needed for regeneration or de-sulfation.

Open-loop control can be driven by such conditions as torque, speed, intake manifold temperature, intake manifold pressure, exhaust gas temperature and exhaust gas pressure prior to the catalysts as well as other conditions known to those skilled in the technology. The system can be calibrated such that the engine operating conditions, which are indicative of NOx and sulfur content in the exhaust gas, are used to estimate when regeneration or de-sulfatiori LNA is desirable.

The time required for de-sulfation is somewhat dependent on an assumed range of sulfur content in the exhaust gases, which can vary depending on such factors as the source of the fuel used in the engine and the source of the lubricating oils used in the engine.

A closed-loop control can be used to determine when to commence a regeneration or de-sulfation cycle and, how to efficiently operate each cycle in light of the aftertreatment architecture chosen. By way of example, referring to any one of Figures 2 through 4, one such control strategy for selecting a de-sulfation cycle can monitor NOx levels within lead line 12 downstream of LNA 16 over the course of many regeneration cycles. When the capacity of the LNA falls below a predetermined level, the.controller can direct a de-sulfation cycle. The capacity of the LNA can be measured between regeneration cycles. When the length of time between regeneration cycles falls below a predetermined level, then the controller will commence a de-sulfation cycle. The controller can control exhaust gas flow and the introduction of reductant to provide a de-sulfation strategy that helps to limit the use of reductant. For regeneration cycle control, the NOx slip through LNA 16 can be measured to select commencement of a regeneration cycle.

During an adsorption, regeneration or de-sulfation cycle, the exhaust gas must be provided to the LNA as lean exhaust gas (during adsorption) or as a rich exhaust gas (oxygen depleted environment) and with a temperature appropriate for the adsorption, regeneration or de-sulfation cycle, as the case may be.

The flow of exhaust gas through the NOx LNA during regeneration is referred to as the regeneration flow herein. The flow of exhaust gas through the LNA during de-sulfation is referred to as de-sulfation flow herein.

Referring to Figure 2, during a regeneration cycle or a de-sulfation cycle, controller 64 determines a regeneration or de-sulfation strategy based, generally, on the exhaust gas flow, the exhaust gas temperature, a desired exhaust gas flow chosen considering the reactive capacity of catalyst 18 at a given exhaust gas temperature, and lambda of the exhaust gas from the engine. The regeneration and de-sulfation strategy for a given regeneration cycle or de-sulfation cycle can be done by an open-loop or closed-loop strategy as discussed above. The regeneration and de-sulfation strategy can be controlled by the quantity and rate of the reductant introduced into the exhaust gas from store 44, and by the amount of exhaust gas flow through hot line 49 dictated by valve 51.

A bypass is provided prior to catalyst 18. Bypass line 20 with flow controlled by valves 24 and 30 helps to reduce the amount of exhaust gas that needs to be oxidized or heated during either regeneration or de-sulfation. The goal is to provide an exhaust gas environment wherein lambda is below or equal to one and the temperature of the exhaust gas is high enough to promote either reaction (7) through (12) or (15) as the case may be. The reductants are oxidized to provide the energy required to heat the exhaust gas.

During regeneration, regeneration flow includes a portion of exhaust not diverted through bypass 20 that is oxidized and heated and routed, in many cases, through line 12a.

De-sulfation flow is directed through hot line 49 so that it retains more heat compared to the case where the exhaust gas is routed through line 12a of line 12.

At commencement of a de-sulfation cycle, controller 64 causes valve 51 to open and valve 57 to close. The de-sulfation flow bypasses line 12a to some extent, depending on the control strategy chosen and the valve position chosen for valve 57 in line 12a. Bypass line 20 is helpful to ensure efficient regeneration and de-sulfation, however, it is not mandatory. The system may be capable of providing full exhaust flow through the LNA during de-sulfation.

Note that oxidation through the LNA with other reductants such as hydrogen, methane or other hydrocarbons can also provide an exotherm required to provide de-sulfation temperatures across the LNA and the necessary rich exhaust gas environment.

Using the variables considered above for open loop control of the aftertreatment system, the' controller is preferably calibrated to direct flow of exhaust gas through the LNA and reductant into the exhaust gas based on the engine speed and load just prior to and during either regeneration or de-sulfation cycles. Engine intake manifold temperature, intake air mass flow, fuel flow or intake manifold pressure can also be used as indicators of exhaust gas properties that are useful for controlling the de-sulfation cycle. A constant de-sulfation cycle time can also be used. This can be appropriate as the de-sulfation cycle time is relatively long as compared to such variables as the catalyst light off time and cycle variations related to varying exhaust gas flow.

An open-loop strategy employs an engine calibration that considers one or more engine operating conditions, each of which is indicative of at least one of exhaust gas temperature, flow and lambda value. The controller is calibrated to direct a desired flow of exhaust gas through the LNA based on the characteristics of catalyst 18 and LNA 16. A look-up table can be used to determine whether the exhaust gas flow exceeds the desired regeneration or de-sulfation flow and, if so, controller 64 can cause excess exhaust gas to be diverted around LNA 16 via bypass line 20. The desired bypass flow is achieved by adjusting valves 24 and 30 to match the target de-sulfation flow though LNA 16.

The look-up table can also be used to provide a desired flow rate across hot line 49. As mentioned above, valve 51 may be opened at the commencement of a de-sulfation or a regeneration cycle to direct a significant portion of the regeneration or de-sulfation flow through hot line 49. Valve 57 disposed in line 12a can provide additional control over the flow through hot line 49 during regeneration or de-sulfation.

Valves suitable for the purpose described for valves 51 and 57 are well known. For example, each valve described in the embodiment of Figures 2 through 4 could be a simple two position valve, a multi-position valve, or a variable position control valve, with the choice of valve type being dictated by cost and the desired degree of control. Also, one of valves 51 or 57 could be eliminated, reducing control, but simplifying controls and reducing costs and maintenance by removing a moving component. In each case, the controller can adjust de-sulfation flow by splitting the flow through line 12a and hot line 49.

With reference to the embodiment provided in the Figure 2, valves 51 can also be eliminated retaining an operable system. Regeneration and de-sulfation flow and adsorption exhaust gas flow control would need to consider that a portion of the de-sulfation flow would be directed from catalyst 18 to LNA 16 through hot line 49 during all operating modes. By continuously splitting the exhaust flow in this manner, the exhaust gas temperature may be elevated at LNA 16. Another means could be provided, where desired, for managing temperature to keep the exhaust gas below a target temperature during an adsorption cycle. Alternatively, without valve 57, there will always be a quantity of exhaust gas flow through line 12a, and the controller would need to consider this. In all cases, closed-loop strategies can be combined with the above. In some closed-loop strategies, temperature sensor 58 can be used to feed data to controller 64 that can be used by controller 64 to control the efficiency of the regeneration and de-sulfation cycles.

The look-up table for an open-loop control can also provide a target reductant concentration prior to catalyst 18 during regeneration or de-sulfation. The engine operating conditions provide information about the exhaust gas temperature, flow and lambda of the exhaust gas from block 10. The temperature of the exhaust gas can be used to determine the amount of reductant required in order to meet the target temperature range for the exhaust gas during regeneration and de-sulfation cycles. This target temperature range should be held below a temperature that might damage the catalyst and above a temperature suitable for efficient reformation of reductant and, therefore, regeneration or de-sulfation of LNA 16. Moreover, the lambda of the exhaust gas, estimated from the engine operating conditions, determines the amount of reductant required to provide a sufficiently rich exhaust gas environment to support efficient regeneration or de-sulfation.

Referring again to Figure 1, a closed-loop strategy could also be used wherein the temperature could be measured prior to or after catalyst 18 (see sensor 58 shown before catalyst 18 in the embodiment shown) and prior to LNA 16 through line 62. The load and speed of the engine could be used by the controller to determine the exhaust gas flow based on look-up tables. A flow meter within the exhaust line could also be used for further closed-loop control. The look-up table along with sensor information can be used to determine the flow of reductant to be introduced into lead line 12 and how much flow of exhaust gas, if any, to direct through valve 24 and line 20 during regeneration or de-sulfation cycles to maintain a target regeneration or de-sulfation, flow and regeneration or de-sulfation temperature.

When exhaust gas flow is too high for catalyst 18 to allow complete oxidation of methane or too high to de-sulfate efficiently, some flow is directed into bypass line 20 until the desired flow is met.

If temperature prior to LNA 16 is too high or too low, the methane quantity can be adjusted to achieve the desired de-sulfation temperature. This can also be done monitoring the temperature into or out of catalyst 18.

As with the open-loop system above, de-sulfation flow through hot line 49 can be determined by a calibration provided to the controller that would include an engine map corresponding to a flow split through hot line 49 and line 12a. This is dependent on the control available to the controller resulting from the availability and type of valves in line 12a and/or hot line 49. Also, an open-loop control could be used that would also consider the temperature of the regeneration or de-sulfation flow prior to LNA 16 and direct that de-sulfation flow through hot line 49 and line 12a to target the desired temperature required to ensure efficient regeneration or de-sulfation of LNA 16. The temperature can also be used to control valve 36 to vary reductant flow or quantity providing a hotter exhaust gas into LNA 16.

As noted above, a closed-loop strategy may be preferred depending on cost and application considerations. The open-loop strategy discussed above utilizes a calibration of the system that provides a target reductant injection rate and quantity over a regeneration and de-sulfation cycle that is based on the engine operating parameters such as load and speed, and could eliminate dynamic monitoring and the added complexity in hardware and software for the system. However, the trade-off is that such a strategy is more likely to regenerate or de-sulfate LNA 16 incompletely or less efficiently.

Controls, as described above, may also be used to control embodiments having a turbine-driven blower 82. Here, however, control is needed to monitor the flow of air into lead line 12 through valve 80 during adsorption cycles. During a regeneration or de-sulfation cycle, valve 90 can be opened to direct all or a portion of the flow around turbine driven blower 82, as desired to match the temperature requirement for exhaust gas through LNA 16. Although, not shown in this embodiment, as would be understood by a person, skilled in the art, a bypass could also be used between catalyst 18 and LNA 16 (upstream of catalyst 18 and downstream of LNA 16). This bypass would be used in the same manner as described for the first embodiment in Figure 1.

In addition to hot line 86, line 91 could also be used to remove load from turbine driven blower 82 when there is a need to maintain exhaust gas heat.

For the embodiment shown in Figure 3 flow sensors through valve 80 and temperature sensors within the line 12 could be used to provide closed-loop control for adsorption, regeneration and de-sulfation cycles.

More generally, referring to Figure 4, the three heat exchangers or turbines could also be controlled as needed to manipulate exhaust temperature through to LNA 16. Open or closed-loop controls could control flow and temperature through the exhaust line into LNA 16 to ensure the exhaust gas temperature falls within a desired range regardless of the operating demands on the engine and whether adsorption, regeneration or de-sulfation is sought from the aftertreatment system.

To simplify the system, an alternative to using variable flow control valves is to use two position valves (or for that matter other multiple position valves). For example, for valves 24, 30, 51 and 57 the controller can elect from one of a plurality of possible settings to control flow through lines 12, 20 and 49. Valve 30 can be fully open or partially open. Valves 24, 51 and 57 can be closed or open. Therefore, controller 70 can select a position for each valve according to the engine operating parameters in order to match exhaust flow through line 12 to a pre-determined target value. That is, at low speed and load, valve 30 and 51 are open fully, and valves 24 and 57 are closed. At higher loads and speeds, valves 24, 30 and 51 are fully opened and valve 57 can be closed. At still higher speeds and loads, valve 30 is partially open and valves 24 and 51 are opened while valve 57 can be opened or closed.

As would be understood by those skilled in the art, valves used in the aftertreatment systems shown could be any flow control mechanism and need not be limited to valves.

Other valve configurations can be used as well. More flexibility for the controller to manage flow during adsorption, regeneration and de-sulfation cycles helps the controller to meet a target pre-determined flow for each cycle. A trade-off is that such flexibility can result in a system that requires more expensive valves and more complicated software to control those valves.

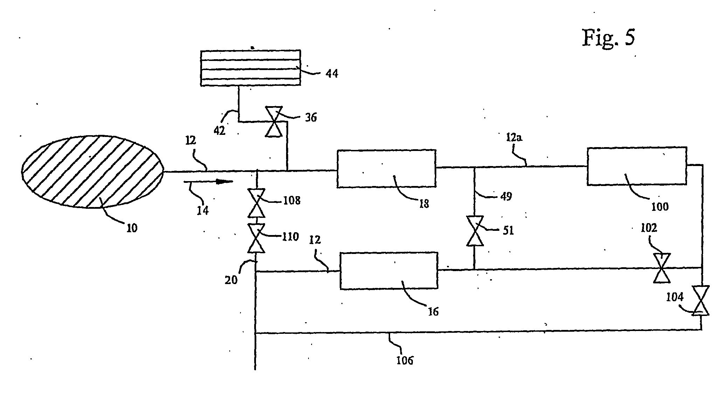

Figure 5 shows an additional embodiment of the invention. Here, a second LNA is added: SOx adsorber 100. Exhaust lines include lead line 12, bypass line 20, line 12a, hot line 49 and sulfur line 106. To control flow through SOx adsorber 100, valves 102 and 104 are used to control exhaust gas flow through LNA 16 or around LNA 16 by way of sulfur line 106. Valves, 108 and 110 are used to control bypass flow (where desired) around LNA 16, catalyst 18 and SOx adsorber 100. Note here, as mentioned above, as a demonstration of an alternative flow control architecture, the bypass control valves 108 and 110 are both in bypass line 20 where one of these valves was in lead line 12 in the embodiment demonstrated in fig. 2 above.

The embodiment shown in Figure 5 is a version of the embodiment shown in Figure 2 which has been modified to include SOx adsorber 100. SOx adsorber 100 extends the time between de-sulfation cycles. LNA 16 still needs periodic de-sulfation. However, SOx adsorber 100 in line 12a removes, most of the Sox. The concentration of sulfur compounds in exhaust gas passing through LNA 16 during an adsorption cycle is small. The structure shown however, still needs to allow for de-sulfation of both LNA 16'and the SOx LNA 100.

LNA 16'may be de-sulfated substantially as described above. The heat required to effect de-sulfation is provided by catalyst 18, reductant from reductant store 44 '(introduced through line 42 and valve 36) and hot line 49 ensuring heat in the exhaust is maintained for de-sulfation of the LNA.

A SOx adsorber regeneration cycle (like LNA. regeneration cycles, designed to release the primary trapped component - sulfur compounds in this case - periodically to free up the adsorber for further adsorption), needs to also be incorporated. When SOx adsorber 100 is "full", exhaust gas is oxidized with reaction of reductant from store 44 across catalyst 18. The resulting rich exhaust gas environment through SOx adsorber 100 releases sulfur into the exhaust gas flowing from SOx adsorber 100. This is designed to happen when exhaust gas temperatures are within a range similar for release of NOx from LNA 16. This can allow regeneration of NOx and SOx adsorbers at the same time as long as released sulfur is directed around LNA 16. Here a line directly from catalyst 18 to LNA 16 would be needed to provide relatively sulfur-free exhaust gas required for regeneration of LNA 16. Some of that same exhaust gas would be directed to SOx adsorber 100 and the resulting sulfur-rich exhaust gas would be passed out of the aftertreatment system via line 106. That is, the resulting exhaust gas is routed through valve 104 and from the system along line 106. In the embodiment shown, it is important that valve 102 be closed to avoid release of sulfur rich exhaust gas through LNA 16 during a SOx adsorber regeneration cycle.

The regeneration of NOx and SOx adsorbers could occur in series where the exhaust gas is heated as required for regeneration of SOx adsorber and bypassed through sulfur line 106 immediately after which the exhaust gas is passed through LNA 16 once the regeneration of the SOx adsorber is complete and little sulfur is directed to LNA 16 for a regeneration cycle of this catalyst.

Bypass, line 20 can also be used to help with efficiency during SOx adsorber regeneration cycles by directing some exhaust gas through bypass line 20 thereby reducing the energy required to heat the remaining exhaust gas through line 12a.

A clean-up catalyst, not shown, can optionally be provided to ensure that any hydrogen sulfide released during SOx adsorber regeneration or during de-sulfation is converted to a sulfate.

Note, in this embodiment, that it is less important to include hot line 49, used to de-sulfate LNA 16, As the periods between de-sulfation cycles of LNA 16 are increased considerably with the introduction of the SOx adsorber 100, the loss in efficiency of additional heating for the exhaust gas for de-sulfation to make up for greater heat loss by routing the exhaust gas through line 12a is less important.

In general, an appropriately sized SOx adsorber, could, by way of example, increase the time between de-sulfation cycles of LNA 16 by a factor of 50. By way of example, the SOx adsorber, depending on the fuel used, could be sized one-quarter of the size relative to the LNA. As noted above, the SOx adsorber could be selected to allow for a SOx adsorber regeneration temperature range similar to the NOx adsorber regeneration temperature thus reducing complication in the system by allowing for similar conditions for two different processes. Also, where exhaust flow can be reversed or separated to flow through SOx adsorber and NOx adsorber separately from the same catalyst, by way of example, then regeneration of both of these adsorbers can occur at the.same time.

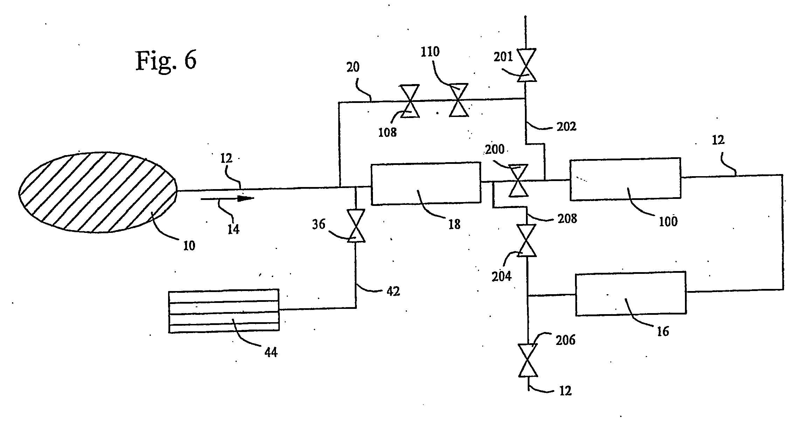

Sulfur line 106 is not essential to the system, however, without it, regeneration of SOx adsorber should either be avoided or should employ a reverse flow strategy like the one taught for the embodiment discussed below (see Figure 6 and the accompanying discussion) .

Figure 6 shows a further embodiment of the invention that includes bypass line 20 with valves 108, 110 and, in the exhaust line, catalyst 18, SOx adsorber 100 and LNA 16. This embodiment also includes lead line 12 that branches into reverse flow line 208. Exhaust gas flow through line 208 is controlled by valves 200 and 204. In general, exhaust lines include lead line 12, bypass line 20, line 208 and reverse flow exit 202.

Valve 201 controls flow out of reverse flow exit 202. Valve 206 controls flow out of lead line 12. Reductant store 44 is provided with reductant line 42. Valve 36 controls flow of the reductant to the catalyst when regeneration and de-sulfation are required.

In operation, during an adsorption cycle, exhaust gas flows from engine block 10 through line 12 and SOx adsorber'100, LNA 16 and out through valve 206. Valves 108, 201 and 204 are closed forcing exhaust gas to flow through valve 206 and out of the aftertreatment system. Control of the system may be as described above.

When a regeneration cycle is required, flow is maintained through catalyst 18 where valve 36 is opened to introduce reductant. The rich, heated exhaust gas may be directed into LNA 16 through valve 204 and out of the system through line 202. As discussed above, some exhaust gas can be directly bypassed around catalyst 18 via line .20.

When the system controller chooses to de-sulfate LNA 16, valves 36 and 204 are opened. Valves 108 and 110 may be opened if bypass of some exhaust gas is preferred. During de-sulfation'of LNA 16, exhaust gas flows from catalyst 18, where with the introduction of a reductant to catalyst 18, the exhaust gas is oxidized, heated and bypassed through valve 204 and line 208 to LNA 16. Valve 206 is closed, routing all exhaust gas through LNA 16. Eventually, the exhaust gas with sulfur from LNA 16 is directed from lead line 12 to line 202 and through valve 200 out of the aftertreatment system.

Similarly, exhaust gas is routed in the same direction during regeneration of SOx adsorber 100. Heated exhaust gas is directed to SOx adsorber 100 by way of line 208 through valve 204 and LNA 16. After releasing sulfur in SOx adsorber 100, the exhaust gas is expelled from the system by way of line 202 through valve 200.

This embodiment could operate with a closed-loop system. A sensor could be placed within the aftertreatment architecture to monitor sulfur slip or NOx slip from SOx adsorber 100 or LNA 16 for determining when these adsorbers need to be regenerated or de-sulfated, after which the valves would be appropriately controlled. The sensor could also measure flow rates through parts of the aftertreatment system to help target the flow requirements through parts of the system during adsorption, de-sulfation and regeneration cycles. As well, the system could be calibrated to take advantage of an open-loop control strategy that determines or estimates the flow rate of exhaust gas and engine operating conditions to approximate when regeneration cycles should occur and when de-sulfation cycles should occur.

During regeneration and de-sulfation cycles where bypass line 20 is used, the NOx levels out of line 12 may increase substantially, as the engine is continuing to operate without NOx treatment of the exhaust gas routed through bypass line 20. Once regeneration and de-sulfation are complete, however, NOx quickly falls as all, exhaust gas is routed through recently regenerated and de-sulfated LNA 16. Therefore, as well as a desire to reduce fuel consumption (consumption of methane), short regeneration and de-sulfation cycles also limit the amount of NOx emitted during de-sulfation through bypass line 20. The longer the period of time needed for regeneration and de-sulfation cycles, the more cumulative exhaust gas flows through bypass line 20.

Catalyst 18 is generically described as a bed that promotes the relevant reactions noted above to provide a desired exhaust gas with a lambda below or equal to one and at or above the regeneration or de-sulfation temperature, as the case may be. As this catalyst needs to heat exhaust gas quickly to a very high temperature, it also needs to be selected from materials able to withstand the temperature needed for the exhaust gas and be capable of heating exhaust gas to those temperatures quickly. A metal substrate for carrying the catalyst is generally preferred, rather than, for example, a ceramic substrate, if the metal substrate improves thermal.response to catalyst 18. As noted above, the quicker the thermal response, the faster the regeneration or de-sulfation cycle can be completed, thereby reducing the amount of untreated exhaust gas allowed to flow through bypass line 20 where used.

Catalyst 18 can be a partial oxidation catalyst that partially oxidizes a reductant (such as methane) and reforms that reductant - see reactions (4) through (6) for the methane example.

Catalyst 18 can also be a back-to-back oxidation catalyst and reformer sharing a common boundary surface. Such catalysts first oxidize reductant until the oxygen potential is reduced sufficiently. These two catalysts, the oxidation catalyst and reformer, can also be disposed in line 12 in series and need not share a common boundary surface. Also, a combination reformer and oxidation catalyst that integrates the reformer and oxidation catalyst together in a mixed catalyst could be used. Each option provides trade-offs between cost and efficiency.

An oxidation catalyst can be a component of catalyst 18, and can be any oxidization catalyst suitable for oxidizing the exhaust gas to reduce the oxygen content. By way of example, a suitable oxidation catalyst can promote the following reactions:

CxHy + (x+y/4) O₂ (Pt) → xCO₂ + y/2 H₂O

CxHy + (x+y/4) O₂ (Pd) → xCO₂ + y/2 H₂O

CxHy + (x/2) O₂ (Pd) → xCO + y/2 H₂

CO + ½ O₂ → CO₂

By way of example only, for the operating conditions known for this application, a suitable washcoat formulation comprises Al₂O₃. Other suitable washcoat formulations can also be used, as would be understood by a person skilled in this technology.

A reformer can be a component of catalyst 18. Reformers suitable for this application are well known. The reformer is preferably suitable to convert a hydrocarbon with water to CO and H₂. By way of example, the reformer can be a precious metal-based catalyst with washcoat materials including Al₂O₃.

Figure 2 shows an additional catalyst, close-coupled catalyst 32, positioned near engine block 10. Some systems may include such a catalyst disposed close to the engine to ensure that the exhaust gas is hot enough to support oxidation of reductant. That is, there are some aftertreatment system designs that would benefit from employing a close-coupled catalyst near the engine block so that the exhaust gas temperature under low load and/or speed or idle conditions can be prevented from falling below a threshold limit at which stable oxidation of methane in catalyst 18 would be compromised. The close-coupled catalyst is typically physically smaller than catalyst 18 and therefore more easily accommodated near the engine. It would not replace catalyst 18. A larger catalyst allows the system to take advantage of higher exhaust gas flows to provide quick de-sulfation cycles. Therefore, under such conditions, there are advantages in having close-coupled catalyst 32 near engine block 10 with line 40 feeding methane into the exhaust gas prior to such catalyst. Catalyst 32 oxidizes the reductant provided from store 44 to heat the exhaust gas to a temperature suitable to allow catalyst 18 to light off satisfactorily.

Note also that the close-coupled catalyst could be placed prior to a turbine, and the heated exhaust gas, partly heated in the turbine, could be used to help drive the turbine for greater flexibility for the engine.

As-noted above, the adsorption, regeneration, and de-sulfation cycles are dependent on the exhaust gas temperature. For example, for regeneration and de-sulfation it is important that the exhaust' gas introduced into catalyst 18 has a temperature above a minimum temperature to ensure that the catalyst is "lit-off" initially. One strategy for ensuring an appropriate exhaust gas temperature from the combustion chamber is to choose a combustion strategy or combustion timing that ensures either relatively late heat release, as might be the case with spark ignited engines, for regeneration or de-sulfation cycles, or by ensuring quick'heat release at higher loads for adsorption. Also, a delayed or second direct injection of fuel into the combustion chamber late in the power stroke when regeneration or de-sulfation is required will help heat the exhaust gas from engine block 10. This can also reduce NOx levels with associated benefits during regeneration or de-sulfation cycles as.a quantity of exhaust gas could be directed through the bypass line without NOx treatment. A reduced NOx level has benefits here. Other strategies are well known to persons skilled in this technology.

As hydrocarbons or hydrogen can be effective reductants, store 44 can be the fuel storage tanks if the engine is fueled by the reductant. For example, for natural gas engines, natural gas can be used as the reductant.

Also, valves 34 and 36 can be injectors that directly inject a suitable reductant, such as methane, into lead line 12. Injectors would provide greater control over the timing and quantity of methane and, therefore, greater control over the duration of the regeneration or de-sulfation cycles.

LNA 16 typically adsorbs and stores NOx in the catalyst washcoat while operating under lean conditions and NO₂ can be released and reduced to N₂ under rich operating conditions when a de-sulfation mixture, that includes hydrogen and rich exhaust gas, is passed through the LNA. As noted above, the following shows typical operation of the LNA under lean conditions:

NO + ½ O₂ (Pt) → NO₂

XO + 2 NO₂ + ½ O₂ → X (NO₃)₂

and under rich conditions:

X(NO₃)₂ → XO + 2NO + 3/2 O₂

X(NO₃) ₂ → XO + 2NO₂ + ½ O₂

NO + CO (Rh) → ½ N₂ + CO₂

2NO₂ + 4H₂ → N₂ + 4H₂O

where X is provided in the washcoat and is typically an alkali (e.g., K, Na, Li, Ce), an alkaline earth (e.g., Ba, Ca, Sr, Mg) or a rare earth (e.g., La, Yt).

A further advantage can be realized if a fuel that combines a reductant such as methane and hydrogen as two major components of the fuel is used. By way of example, natural gas with 10% to 50% hydrogen might be appropriate as an engine fuel and appropriate for regeneration or de-sulfation cycles. Such a fuel could then be utilized in the embodiments discussed wherein the hydrogen introduced with the fuel prior to the oxidation catalyst'could help to light off those catalysts and help to provide an exhaust gas environment with a lambda less than or equal to 1. Further, by providing a quantity of hydrogen into the exhaust stream, the burden on catalyst 18 is reduced. Less reforming is required for de-sulfation due to the presence of hydrogen in the injected fuel.

Reductants that could be used include such things as diesel fuel, gasoline or other hydrocarbons as well as natural gas, methane, ethane, propane, butane or hydrogen or combinations of these fuels.

Whenever flow is referred to in this disclosure, it is the mass or molar flow rate of the gas in question.

Exhaust gas recirculation (EGR) can also be utilized to help reduce NOx emissions during regeneration or de-sulfation cycles when a bypass line is opened. Increased EGR rates during regeneration or de-sulfation can reduce NOx generated in the combustion chamber, resulting in less NOx flowing through bypass line 20 and into the atmosphere. Further, increases in EGR can also be used to reduce the concentration of oxygen in the exhaust gas during regeneration or de-sulfation, reducing, in turn, the burden on the oxidation catalyst to reduce oxygen during a regeneration or de-sulfation cycle as well as reduce the amount of reductant needed to burn off oxygen.

While particular elements, embodiments and applications of the present invention have been shown and described, it will be understood, of course, that the invention is not limited thereto since modifications may be made by those skilled in the art without departing form the scope of the present claims, particularly in light of the foregoing teachings.

## Claims

1. An aftertreatment system for treating NOx found in exhaust gas produced during combustion of a fuel within a combustion chamber of an operating internal combustion engine, said aftertreatment system comprising:
an exhaust line for directing said exhaust gas from said engine (10) and through said aftertreatment system, said exhaust line comprising a cooling line (12a) and a hot line (49) for managing exhaust gas temperature during an adsorption cycle and a regeneration cycle;
a lean NOx adsorber (16) disposed in said exhaust line;
a catalyst (18) disposed in said exhaust line and being capable of oxidizing a reductant and directing said oxidized reductant into said exhaust gas;
a flow control (57, 51) for controlling flow of exhaust gas through said hot line (49) and cooling line (12a);
said exhaust line being capable of delivering exhaust gas from said catalyst (18) to said lean NOx adsorber (16), **characterised in that** said exhaust line comprises a by-pass line (20) capable of directing said exhaust gas around said catalyst (18) and **in that** the system comprises a reductant line (38, 40) for delivering a reductant from a reductant store (44) to said catalyst (18); and
a reductant flow control (34, 36) disposed in said reductant line (38, 40) for controlling flow of said reductant into said exhaust line.

2. An aftertreatment system according to claim 1 wherein a said cooling line (12a) and said hot line (49) are between said catalyst (18) and said NOx adsorber (16).

3. An aftertreatment system according to claim 1 wherein said cooling line (12a) is longer than said hot line (49).

4. An aftertreatment system according to claim 1 comprising a turbine (152) disposed in said cooling line (146).

5. An aftertreatment system according to claim 4 wherein said turbine drives an air blower (82) disposed in an air dilution line (12) and connected to compress air and direct the compressed air into said cooling line.

6. An aftertreatment system according to claim 1 comprising an air blower (82) disposed in an air dilution line (12) for compressing and directing air into said cooling line.

7. An aftertreatment system according to claim 1 comprising a heat exchanger (150) disposed in said cooling line (144).

8. An aftertreatment system according to claim 1 comprising a close-coupled catalyst (32) in said exhaust line upstream of said catalyst (18), said reductant line (40) capable of delivering reductant to said exhaust line upstream of said close-coupled catalyst (32).

9. An aftertreatment system according to claim 1 wherein said reductant line (38) delivers said reductant to said exhaust line upstream of said catalyst (18).

10. An aftertreatment system according to claim 1 further comprising a SOx adsorber (100) disposed in said exhaust line to remove SOx from said exhaust gas before said exhaust gas passes through said NOx adsorber (16) during an adsorption cycle.

11. An aftertreatment system according to claim 10 wherein said exhaust line further comprises a sulfur line (106) for bypassing said exhaust gas around said NOx adsorber (16) when regenerating said SOx adsorber (100) and a flow control (102, 104) for controlling flow of exhaust gas through said sulfur line (106).

12. An aftertreatment system according to claim 10 wherein said hot line (49) is a reverse flow line capable of alternating flow of said exhaust gas where said NOx adsorber (16) is upstream of said SOx adsorber (100).

13. An aftertreatment system according to claim 1 wherein a cooling line length is chosen relative to a hot line length such that more exhaust gas

14. An aftertreatment system according to claim 1 wherein a cooling line material is chosen such that more exhaust gas heat is dissipated through said cooling line than would occur through said hot line

15. A method of operating an aftertreatment system for removing NOx from exhaust gas generated by combustion of a fuel in at least one combustion chamber of an internal combustion engine, said method comprising an adsorption cycle, a regeneration cycle and a de-sulfation cycle:
during said adsorption cycle:
cooling said adsorption gas to within a predetermined adsorption temperature range when said exhaust gas is above said adsorption temperature range,
directing all of said cooled exhaust gas through an exhaust line to a lean NOx adsorber disposed in said exhaust line,
during said regeneration cycle:
directing a first portion of said exhaust gas through a bypass line around said lean NOx adsorber;
oxidizing at least a second portion of said exhaust gas to a lambda value of less than or equal to 1,
heating said at least said second portion of said exhaust gas to within a predetermined regeneration temperature range when said at least said second portion of said exhaust gas is below said regeneration temperature range;
directing said oxidized and heated exhaust gas through said lean Nox adsorber,
during said de-sulfation cycle:
oxidizing said exhaust gas to a lambda value of less than or equal to 1,
heating said exhaust gas to within a predetermined de-sulfation temperature range when said exhaust gas is below said de-sulfation temperature range
directing said oxidized and heated exhaust gas through said lean NOx adsorber.

16. A method according to claim 15 wherein, during said adsorption cycle, cooling said exhaust gas comprises introducing air into said exhaust gas.

17. A method according to claim 15 wherein during said adsorption cycle, cooling said exhaust gas comprises directing said exhaust gas through a turbine.

18. A method according to claim 17 wherein said turbine is used to drive a blower for directing air into said exhaust line upstream of said NOx adsorber.

19. A method according to claim 15 wherein during said adsorption cycle, cooling said exhaust gas comprises expanding said exhaust gas.

20. A method according to claim 15 wherein, during said adsorption cycle, cooling said exhaust gas comprises directing said exhaust gas through a heat exchanger.

21. A method according to claim 15 wherein, during said adsorption cycle, cooling said exhaust gas comprises routing said exhaust through a cooling line.

22. A method according to claim 15 wherein said at least said second portion of said exhaust gas does not include said first portion of said exhaust gas.

23. A method according to claim 15 wherein, during said de-sulfation cycle, directing a portion of said exhaust gas through a bypass line around said lean NOₓ adsorber.

24. A method according to claim15 wherein, during said adsorption cycle, directing said exhaust gas through a SOx adsorber disposed in said exhaust line prior to directing said exhaust gas through said NOx adsorber.

25. A method according to claim 15 wherein said exhaust gas is heated and oxidized by passing said exhaust gas through a catalyst with a reductant introduced into said exhaust gas.

26. A method according to any one of claims 15 through 25 wherein said reductant is selected from the group consisting of hydrocarbons, hydrogen, and combinations thereof.

27. A method according to claim 26 wherein said reductant includes a hydrocarbon selected from the group consisting of natural gas, diesel, methane, ethane, butane, propane, and combinations thereof.

## Patentansprüche

1. **Ein Nachbehandlungssystem zur Behandlung von NOx, das in Abgas gefunden wird, welches während der Verbrennung** eines Kraftstoffs innerhalb einer Brennkammer eines laufenden Verbrennungsmotors produziert wird, wobei das Nachbehandlungssystem Folgendes beinhaltet:
einen Abgasstrang zum Leiten des Abgases aus dem Motor (10) **und durch das Nachbehandlungssystem, wobei der** Abgasstrang einen Kühlstrang (12a) und einen Heißstrang (49) zum Regeln der Abgastemperatur während eines Adsorptionszyklus und eines Regenerationszyklus beinhaltet;
einen Mager-NOx-Adsorber (16), der in dem Abgasstrang angeordnet ist;
einen Katalysator (18), der in dem Abgasstrang angeordnet und fähig ist, ein Reduktionsmittel zu oxidieren und das oxidierte Reduktionsmittel in das Abgas zu leiten;
eine Flusssteuerung (57, 51) zum Steuern des Flusses von Abgas durch den Heißstrang (49) und den Kühlstrang (12a);
wobei der Abgasstrang fähig ist, Abgas aus dem Katalysator (18) an den Mager-NOx-Adsorber (16) abzugeben, **dadurch gekennzeichnet, dass** der Abgasstrang einen Umleitungsstrang (20) beinhaltet, der fähig ist, das Abgas um den Katalysator (18) zu leiten, und **dadurch, dass** das System einen Reduktionsmittelstrang (38, 40) zum Abgeben eines Reduktionsmittels aus einem Reduktionsmittelspeicher (44) an den Katalysator (18) beinhaltet; und
eine Reduktionsmittel-Flusssteuerung (34, 36), die in dem **Reduktionsmittelstrang (38, 40) angeordnet ist, zum Steuern** des Flusses des Reduktionsmittels in den Abgasstrang.

2. Nachbehandlungssystem gemäß Anspruch 1, wobei der Kühlstrang (12a) und der Heißstrang (49) zwischen dem Katalysator (18) und dem NOx-Adsorber (16) liegen.

3. Nachbehandlungssystem gemäß Anspruch 1, wobei der Kühlstrang (12a) länger als der Heißstrang (49) ist.

4. Nachbehandlungssystem gemäß Anspruch 1, das eine Turbine (152) beinhaltet, die in dem Kühlstrang (146) angeordnet ist.

5. Nachbehandlungssystem gemäß Anspruch 4, wobei die Turbine ein Druckluftgebläse (82) antreibt, das in einem Luftverdünnungsstrang (12) angeordnet und verbunden ist, um Luft zu komprimieren und die komprimierte Luft in den Kühlstrang zu leiten.

6. Nachbehandlungssystem gemäß Anspruch 1, das ein Druckluftgebläse (82) beinhaltet, das zum Komprimieren und Leiten von Luft in den Kühlstrang in einem **Luftverdünnungsstrang (12) angeordnet ist.**

7. Nachbehandlungssystem gemäß Anspruch 1, das einen Wärmetauscher (150) beinhaltet, der in dem Kühlstrang (144) angeordnet ist.

8. Nachbehandlungssystem gemäß Anspruch 1, das einen fest gekoppelten Katalysator (32) stromaufwärts von dem Katalysator (18) in dem Abgasstrang beinhaltet, wobei der Reduktionsmittelstrang (40) fähig ist, Reduktionsmittel stromaufwärts von dem fest gekoppelten Katalysator (32) an den Abgasstrang abzugeben.

9. Nachbehandlungssystem gemäß Anspruch 1, wobei der Reduktionsmittelstrang (38) das Reduktionsmittel stromaufwärts von dem Katalysator (18) an den Abgasstrang abgibt.

10. Nachbehandlungssystem gemäß Anspruch 1, das ferner einen SOx-Adsorber (100) beinhaltet, der in dem Abgasstrang angeordnet ist, um SOx aus dem Abgas zu entfernen, bevor das Abgas während eines Adsorptionszyklus durch den NOx-Adsorber (16) läuft.

11. Nachbehandlungssystem gemäß Anspruch 10, wobei der **Abgasstrang ferner einen Schwefelstrang (106) zum Umleiten des Abgases um den NOx-Adsorber (16), wenn der SOx-**Adsorber (100) regeneriert wird, und eine Flusssteuerung (102, 104) zum Steuern des Flusses von Abgas durch den Schwefelstrang (106) beinhaltet.

12. Nachbehandlungssystem gemäß Anspruch 10, wobei der Heißstrang (49) ein Umkehrflussstrang ist, der fähig ist, einen **Fluss des Abgases alternieren zu lassen, wobei der NOx-**Adsorber (16) stromaufwärts von dem SOx-Adsorber (100) liegt.

13. Nachbehandlungssystem gemäß Anspruch 1, wobei eine Kühlstranglänge relativ zu einer Heißstranglänge so gewählt wird, das mehr Abgaswärme durch den Kühlstrang verteilt wird, als durch den Heißstrang auftreten würde.

14. Nachbehandlungssystem gemäß Anspruch 1, wobei ein Kühlstrangmaterial so gewählt wird, das mehr Abgaswärme durch den Kühlstrang verteilt wird, als durch den Heißstrang auftreten würde.

15. Ein Verfahren zum Betreiben eines Nachbehandlungssystems zum Entfernen von NOx aus Abgas, das durch die Verbrennung eines Kraftstoffs in mindestens einer Brennkammer eines Verbrennungsmotors erzeugt wird, wobei das Verfahren einen Adsorptionszyklus, einen Regenerationszyklus und einen Desulfatierungszyklus beinhaltet:
während des Adsorptionszyklus:
Kühlen des Adsorptionsgases auf innerhalb eines zuvor festgelegten Adsorptionstemperaturbereichs, wenn das Abgas über dem Adsorptionstemperaturbereich liegt,
Leiten allen gekühlten Abgases durch einen Abgasstrang zu einem Mager-NOx-Adsorber, der in dem Abgasstrang angeordnet ist;
während des Regenerationszyklus:
Leiten eines ersten Anteils des Abgases durch einen Umleitungsstrang um den Mager-NOx-Adsorber,
Oxidieren von mindestens einem zweiten Anteil des Abgases auf einen Lambda-Wert von weniger als oder gleich 1,
Erwärmen mindestens des zweiten Anteils des Abgases auf innerhalb eines zuvor festgelegten Regenerationstemperaturbereichs, wenn mindestens der zweite Anteil des Abgases unter dem **Regenerierungstemperaturbereich liegt,**
Leiten des oxidierten und erwärmten Abgases durch den Mager-NOx-Adsorber;
während des Desulfatierungszyklus:
Oxidieren des Abgases auf einen Lambda-Wert von weniger als oder gleich 1,
Erwärmen des Abgases auf innerhalb eines zuvor festgelegten Desulfatierungstemperaturbereichs, wenn das Abgas unter dem Desulfatierungstemperaturbereich liegt,
Leiten des oxidierten und erwärmten Abgases durch den **Mager-NOx-Adsorber.**

16. Verfahren gemäß Anspruch 15, wobei das Kühlen des Abgases während des Adsorptionszyklus das Einführen von Luft in das Abgas beinhaltet.

17. Verfahren gemäß Anspruch 15, wobei das Kühlen des Abgases während des Adsorptionszyklus das Leiten des Abgases durch eine Turbine beinhaltet.

18. Verfahren gemäß Anspruch 17, wobei die Turbine verwendet wird, um ein Gebläse zum Leiten von Luft in den Abgasstrang **stromaufwärts von dem NOx-Adsorber anzutreiben.**

19. Verfahren gemäß Anspruch 15, wobei das Kühlen des Abgases **während des Adsorptionszyklus das Expandieren des Abgases** beinhaltet.

20. Verfahren gemäß Anspruch 15, wobei das Kühlen des Abgases während des Adsorptionszyklus das Leiten des Abgases durch **einen Wärmetauscher beinhaltet.**

21. Verfahren gemäß Anspruch 15, wobei das Kühlen des Abgases während des Adsorptionszyklus das Führen des Abgases durch einen Kühlstrang beinhaltet.

22. Verfahren gemäß Anspruch 15, wobei mindestens der zweite Anteil des Abgases den ersten Anteil des Abgases nicht umfasst.

23. Verfahren gemäß Anspruch 15, wobei ein Anteil des Abgases während des Desulfatierungszyklus durch einen Umleitungsstrang um den Mager-NOx-Adsorber geleitet wird.

24. Verfahren gemäß Anspruch 15, wobei das Abgas während des Adsorptionszyklus durch einen SOx-Adsorber, der in dem Abgasstrang angeordnet ist, geleitet wird, bevor das Abgas durch den NOx-Adsorber geleitet wird.

25. Verfahren gemäß Anspruch 15, wobei das Abgas erwärmt und oxidiert wird, indem das Abgas durch einen Katalysator läuft, wobei ein Reduktionsmittel in das Abgas eingeführt wird.

26. Verfahren gemäß einem der Ansprüche 15 bis 25, wobei das Reduktionsmittel aus der Gruppe ausgewählt wird, die aus Kohlenwasserstoffen, Wasserstoff und Kombinationen davon besteht.

27. Verfahren gemäß Anspruch 26, wobei das Reduktionsmittel einen Kohlenwasserstoff umfasst, der aus der Gruppe ausgewählt ist, die aus Naturgas, Diesel, Methan, Ethan, Butan, Propan und Kombinationen davon besteht.

## Revendications

1. Un système de traitement subséquent destiné à traiter le NOx trouvé dans le gaz d'échappement produit au cours de la combustion d'un carburant au sein d'une chambre de combustion d'un moteur à combustion interne en fonctionnement, ledit système de traitement subséquent comprenant :
une ligne d'échappement destinée à diriger ledit gaz d'échappement dudit moteur (10) et à travers ledit système de traitement subséquent, ladite ligne d'échappement comprenant une ligne de refroidissement (12a) et une ligne chaude (49) destinées à gérer la température de gaz d'échappement au cours d'un cycle d'adsorption et d'un cycle de régénération ;
un adsorbeur de NOx pauvre (16) disposé dans ladite ligne d'échappement ;
un catalyseur (18) disposé dans ladite ligne d'échappement et à même d'oxyder un agent réducteur et de diriger ledit agent réducteur oxydé dans ledit gaz d'échappement ;
un contrôle de flux (57, 51) destiné à contrôler le flux de gaz d'échappement passant par ladite ligne chaude (49) et ladite ligne de refroidissement (12a) ;
ladite ligne d'échappement à même de délivrer du gaz d'échappement dudit catalyseur (18) audit adsorbeur de NOx pauvre (16), **caractérisé en ce que** ladite ligne d'échappement comprend une ligne de dérivation (20) à même de diriger ledit **gaz d'échappement autour dudit catalyseur (18) et en ce que le** système comprend une ligne d'agent réducteur (38, 40) destinée à délivrer un agent réducteur d'une réserve d'agent réducteur (44) audit catalyseur (18) ; et
un contrôle de flux d'agent réducteur (34, 36) disposé dans ladite ligne d'agent réducteur (38, 40) destiné à contrôler le flux dudit agent réducteur dans ladite ligne d'échappement.

2. Un système de traitement subséquent selon la revendication 1 dans lequel ladite ligne de refroidissement (12a) et ladite ligne chaude (49) sont entre ledit catalyseur (18) et ledit adsorbeur de NOx (16).

3. **Un système de traitement subséquent selon la revendication 1** dans lequel ladite ligne de refroidissement (12a) est plus longue que ladite ligne chaude (49).

4. Un système de traitement subséquent selon la revendication 1 comprenant une turbine (152) disposée dans ladite ligne de refroidissement (146).

5. **Un système de traitement subséquent selon la revendication 4 dans lequel ladite turbine entraîne un pulseur d'air (82) disposé** dans une ligne de dilution d'air (12) et connecté pour comprimer l'air et diriger l'air comprimé dans ladite ligne de refroidissement.

6. Un système de traitement subséquent selon la revendication 1 comprenant un pulseur d'air (82) disposé dans une ligne de dilution d'air (12) destiné à comprimer et à diriger l'air dans ladite ligne de refroidissement.

7. Un système de traitement subséquent selon la revendication 1 comprenant un échangeur de chaleur (150) disposé dans ladite ligne de refroidissement (144).

8. Un système de traitement subséquent selon la revendication 1 comprenant un catalyseur à couplage direct (32) dans ladite ligne d'échappement en amont dudit catalyseur (18), ladite ligne d'agent réducteur (40) à même de délivrer un agent réducteur à ladite ligne d'échappement en amont dudit catalyseur à couplage direct (32).

9. Un système de traitement subséquent selon la revendication 1 dans lequel ladite ligne d'agent réducteur (38) délivre ledit agent réducteur à ladite ligne d'échappement en amont dudit catalyseur (18).

10. Un système de traitement subséquent selon la revendication 1 comprenant de plus un adsorbeur de SOx (100) disposé dans ladite ligne d'échappement pour retirer le SOx dudit gaz d'échappement avant que ledit gaz d'échappement ne passe par ledit adsorbeur de NOx (16) au cours d'un cycle d'adsorption.

11. Un système de traitement subséquent selon la revendication 10 dans lequel ladite ligne d'échappement comprend une ligne de soufre (106) destinée à dériver ledit gaz d'échappement autour dudit adsorbeur de NOx (16) lors de la régénération dudit adsorbeur de SOx (100) et un contrôle de flux (102, 104) destiné à contrôler le flux de gaz d'échappement à travers ladite ligne de soufre (106).

12. Un système de traitement subséquent selon la revendication 10 dans lequel ladite ligne chaude (49) est une ligne de flux inversé à même d'alterner le flux dudit gaz d'échappement où ledit adsorbeur de NOx (16) est en amont dudit adsorbeur de SOx (100).

13. Un système de traitement subséquent selon la revendication 1 dans lequel une longueur de ligne de refroidissement est choisie relativement à une longueur de ligne chaude, de sorte que plus de chaleur de gaz d'échappement est dissipée à travers ladite ligne de refroidissement par rapport à ce qui se produirait à travers ladite ligne chaude.

14. Un système de traitement subséquent selon la revendication 1 dans lequel un matériau de ligne de refroidissement est choisi, de sorte que plus de chaleur de gaz d'échappement est dissipée à travers ladite ligne de refroidissement par rapport à ce qui se produirait à travers ladite ligne chaude.

15. Une méthode pour faire fonctionner un système de traitement subséquent destiné à retirer du NOx de gaz d'échappement généré par la combustion d'un carburant dans au moins une chambre de combustion d'un moteur à combustion interne, ladite méthode comprenant un cycle d'adsorption, un cycle de régénération et un cycle de désulfatation :
au cours dudit cycle d'adsorption :
refroidir ledit gaz d'adsorption à une température au sein d'une gamme de températures d'adsorption prédéterminée lorsque ledit gaz d'échappement est au-dessus de ladite gamme de températures d'adsorption,
diriger l'intégralité dudit gaz d'échappement refroidi à travers une ligne d'échappement jusqu'à un adsorbeur de NOx pauvre disposé dans ladite ligne d'échappement,
au cours dudit cycle de régénération :
diriger une première portion dudit gaz d'échappement à travers une ligne de dérivation autour dudit adsorbeur de NOx pauvre ;
oxyder au moins une deuxième portion dudit gaz d'échappement à une valeur lambda inférieure ou égale à 1 ;
chauffer au moins ladite deuxième portion dudit gaz d'échappement à une température au sein d'une gamme de températures de régénération prédéterminée lorsqu'au moins ladite deuxième portion dudit gaz d'échappement est en dessous de ladite gamme de températures de régénération ;
diriger ledit gaz d'échappement oxydé et chauffé à travers ledit adsorbeur de NOx pauvre,
au cours dudit cycle de désulfatation :
oxyder ledit gaz d'échappement à une valeur lambda inférieure ou égale à 1,
chauffer ledit gaz d'échappement à une température au sein d'une gamme de températures de désulfatation prédéterminée lorsque ledit gaz d'échappement est en dessous de ladite gamme de températures de désulfatation
diriger ledit gaz d'échappement oxydé et chauffé à travers ledit adsorbeur de NOx pauvre.

16. Une méthode selon la revendication 15 dans laquelle, au cours dudit cycle d'adsorption, refroidir ledit gaz d'échappement comprend introduire de l'air dans ledit gaz d'échappement.

17. Une méthode selon la revendication 15 dans laquelle, au cours dudit cycle d'adsorption, refroidir ledit gaz d'échappement comprend diriger ledit gaz d'échappement à travers une turbine.

18. Une méthode selon la revendication 17 dans laquelle ladite turbine est utilisée pour entraîner un pulseur destiné à diriger de l'air dans ladite ligne d'échappement en amont dudit adsorbeur de NOx.

19. Une méthode selon la revendication 15 dans laquelle, au cours dudit cycle d'adsorption, refroidir ledit gaz d'échappement comprend dilater ledit gaz d'échappement.

20. Une méthode selon la revendication 15 dans laquelle, au cours dudit cycle d'adsorption, refroidir ledit gaz d'échappement comprend diriger ledit gaz d'échappement à travers un échangeur de chaleur.

21. Une méthode selon la revendication 15 dans laquelle, au cours dudit cycle d'adsorption, refroidir ledit gaz d'échappement comprend acheminer ledit gaz d'échappement à travers une ligne de refroidissement.

22. **Une méthode selon la revendication 15 dans laquelle au moins** ladite deuxième portion dudit gaz d'échappement n'inclut pas ladite première portion dudit gaz d'échappement.

23. Une méthode selon la revendication 15 dans laquelle, au cours dudit cycle de désulfatation, une portion dudit gaz d'échappement est dirigée à travers une ligne de dérivation autour dudit adsorbeur de NOx pauvre.

24. **Une méthode selon la revendication 15, dans laquelle, au cours** dudit cycle d'adsorption, ledit gaz d'échappement est dirigé à travers un adsorbeur de SOx disposé dans ladite ligne d'échappement avant de diriger ledit gaz d'échappement à travers ledit adsorbeur de NOx.

25. Une méthode selon la revendication 15 dans laquelle ledit gaz d'échappement est chauffé et oxydé en passant ledit gaz d'échappement à travers un catalyseur avec un agent réducteur introduit dans ledit gaz d'échappement.

26. Une méthode selon n'importe laquelle des revendications 15 à 25 dans laquelle ledit agent réducteur est sélectionné dans le groupe consistant en hydrocarbures, hydrogène, et des combinaisons de ceux-ci.

27. Une méthode selon la revendication 26 dans laquelle ledit agent réducteur inclut un hydrocarbure sélectionné dans le groupe consistant en gaz naturel, diesel, méthane, éthane, butane, propane, et des combinaisons de ceux-ci.
